(19) Europäisches Patentamt
European Patent Office
Office européen des brevets

(11) **EP 4 650 988 A1**

(12) **EUROPEAN PATENT APPLICATION**

(43) Date of publication:
**19.11.2025 Bulletin 2025/47**

(21) Application number: 25174849.7

(22) Date of filing: **07.05.2025**

(51) International Patent Classification (IPC):
**G06F 17/16** (2006.01)   **G06F 7/00** (2006.01)

(52) Cooperative Patent Classification (CPC):
**G06F 17/16; G06F 7/483; G06F 7/5443;**
G06F 2207/3892

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **13.05.2024 US 202418662911**

(71) Applicant: **Microsoft Technology Licensing, LLC
Redmond, WA 98052 (US)**

(72) Inventors:
• **Ravgad, Segev
Redmond, 98052 (US)**
• **Shapiro, Yaron Baruch
Redmond, 98052 (US)**
• **Biber, Liran
Redmond, 98052 (US)**

(74) Representative: **CMS Cameron McKenna Nabarro
Olswang LLP
Cannon Place
78 Cannon Street
London EC4N 6AF (GB)**

(54) **HARDWARE ACCELERATOR WITH MATRIX BLOCK STREAMING**

(57)     A hardware accelerator (20) including tiles (24) arranged in a systolic array (22). At each of the tiles, the systolic array receives a first input block (52) that includes first input matrix elements (51) of a first input matrix (50). In each of a plurality of multiplication iterations (72), at each of the tiles, the systolic array receives a respective second input block (62). The systolic array computes tile products (80) of the first input matrix elements and second input matrix elements (61) included in the second input blocks. The systolic array adds the tile products to column-wise partial sums (82) and transmits the column-wise partial sums to subsequent tiles along accumulator rings (84) included in array columns (29) of the systolic array. In a subset (74) of the multiplication iterations, the systolic array outputs product block rows (93) of a product matrix (90). The product block rows each include product matrix blocks (92) computed as rows of the column-wise partial sums.

FIG. 1 (CONVENTIONAL ART)

**Description**

BACKGROUND

Recent advances in machine learning have been facilitated using larger neural networks and increased amounts of training data. Additionally, the use of machine learning models for real-time processing has become more common. To support these developments, specialized hardware, such as hardware accelerators, have been created to efficiently perform computations commonly used in machine learning. These hardware accelerators are designed to perform machine learning computations more efficiently than general-purpose processors like CPUs and even more specialized processors like GPUs.

SUMMARY

A hardware accelerator specialized for performing generalized matrix multiplication (GEMM) operations is described herein that includes a plurality of tiles arranged in a systolic array. Each tile in the systolic array receives a first input block that includes a plurality of first input matrix elements of a first input matrix. In each of a plurality of multiplication iterations, each tile of the systolic array receives a second input block. The second input block includes a plurality of second input matrix elements of a second input matrix. In each of the multiplication iterations, the systolic array computes respective tile products of the first input matrix elements included in the first input blocks and the second input matrix elements included in the second input blocks. In each of the multiplication iterations, the systolic array adds the tile products to respective column-wise partial sums, and subsequently to adding the tile products to the column-wise partial sums, transmits the column-wise partial sums to respective subsequent tiles of the systolic array along accumulator rings included in respective array columns. In a subset of the plurality of multiplication iterations, the systolic array outputs respective product block rows of a product matrix. The product block rows each include a plurality of product matrix blocks computed as rows of the column-wise partial sums.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

BRIEF DESCRIPTION OF THE DRAWINGS

FIG. 1 schematically shows an example generalized matrix multiplication (GEMM) operation.
FIG. 2 schematically shows a computing system including a hardware accelerator specialized for performing GEMM operations, according to one example embodiment.
FIG. 3A schematically shows an example of block-level matrix quantization.
FIG. 3B schematically shows an example of superblock-level matrix quantization.
FIG. 4 schematically shows a first input matrix and a second input matrix that are input into the hardware accelerator, according to the example of FIG. 2.
FIG. 5A schematically shows the hardware accelerator when a systolic array receives first input blocks of the first input matrix, according to the example of FIG. 4.
FIG. 5B schematically shows the hardware accelerator when the systolic array computes tile products and column-wise partial sums at tiles included in the systolic array, according to the example of FIG. 5A.
FIG. 5C schematically shows the hardware accelerator when the systolic array outputs a product matrix, according to the example of FIG. 5B.
FIG. 6 schematically shows the systolic array in additional detail, according to the example of FIGS. 5A-5C.
FIG. 7 schematically shows an 8-bit multiplication circuit that may be included in a tile of the systolic array, according to the example of FIG. 6.
FIG. 8 schematically shows an 8-bit dequantization circuit that may be included in a tile of the systolic array, according to the example of FIG. 6.
FIG. 9 schematically shows an FP16 multiplication circuit that may be included in a tile of the systolic array, according to the example of FIG. 8.
FIG. 10A shows a flowchart of a method for use with a hardware accelerator configured to perform GEMM operations, according to the example of FIG. 2.
FIG. 10B shows additional steps of the method of FIG. 10A that may be performed in examples in which matrix quantization is used.

FIG. 10C shows additional steps of the method of FIG. 10A that may be performed at the systolic array in some examples.

FIG. 11 shows a schematic view of an example computing environment in which the computing system of FIG. 2 may be instantiated.

DETAILED DESCRIPTION

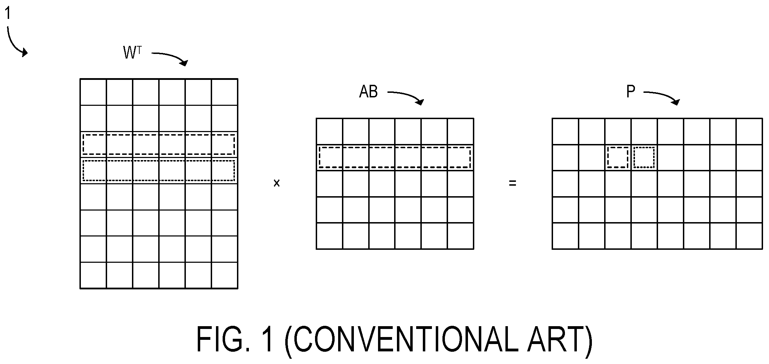

Generalized matrix multiplication (GEMM) is one type of computation that is performed during training and inferencing at neural networks. An example GEMM operation 1 is schematically shown in FIG. 1. The GEMM operation 1 shown in FIG. 1 may, for example, be performed during training or inferencing at a neural network. In the example of FIG. 1, a weight matrix W is multiplied by an activation batch matrix $AB$ to compute a product matrix P. The weight matrix W is shown in transposed form as the transposed weight matrix $W^T$. Thus, dot products are computed between rows of the transposed weight matrix $W^T$ and rows of the activation batch matrix $AB$ to obtain elements of the product matrix P. FIG. 1 shows example locations, in the product matrix P, of the dot products of two different rows of the transposed weight matrix $W^T$ with a row of the activation batch matrix $AB$.

In conventional hardware accelerators that are configured to perform GEMM operations, the input matrices are first loaded into input buffers of the hardware accelerator before processing. The product matrix is also written to an output buffer after it is computed and before the product matrix is output to another component of the computing device. However, writing values into the buffers and reading values out of the buffers each consumes non-negligible amounts of time. Conventional GEMM hardware accelerators read the input matrices in their entirety into input buffers before processing them and read the output matrix in its entirety into the output buffer before outputting it. These memory reading and writing patterns increase the latency of GEMM operations and may lead to low utilization of matrix multiplication circuits during read and write operations.

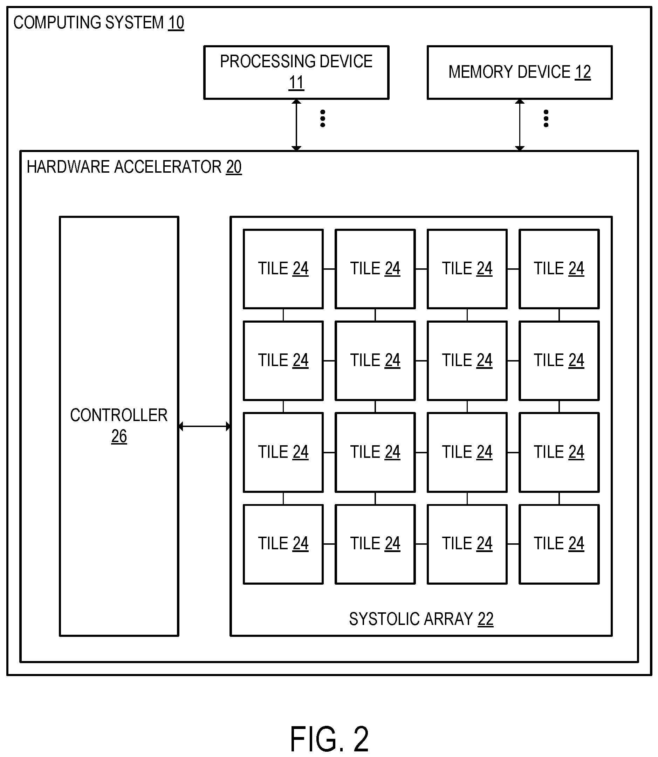

FIG. 2 schematically shows an example computing system 10 including a hardware accelerator 20 specialized for performing GEMM operations. Hardware accelerator 20 may also be referred to as a neural processing unit, due to its specialized configuration for processing computational operations such as GEMM operations involved in training and inference using neural network-based machine learning models. In addition to the hardware accelerator 20, the computing system 10 includes one or more other processing devices 11 and one or more memory devices 12. The one or more other processing devices 11 may include, for example, one or more central processing units (CPUs), one or more graphics processing units (GPUs), and/or one or more other hardware accelerators. The one or more memory devices 12 may include one or more volatile memory devices and/or one or more non-volatile storage devices. In some examples, the one or more processing devices 11 and the one or more memory devices 12 may be distributed across a plurality of interconnected physical computing devices.

As shown in the example of FIG. 2, the hardware accelerator 20 includes a plurality of tiles 24 arranged in a systolic array 22. The tiles 24 are configured to perform computations in parallel, as discussed in further detail below. Inputs and outputs of the tiles 24 are passed along columns of the systolic array 22 when GEMM operations are performed. The systolic array 22 is shown as a $4 \times 4$ array of tiles 24 in the example of FIG. 2 but may have other numbers of rows and/or columns in other examples.

The hardware accelerator 20 of FIG. 2 further includes a controller 26 that is configured to receive instructions from other components of the computing system 10 and control the systolic array 22 based on those instructions. In some examples, the hardware accelerator 20 further includes one or more additional components that are configured to perform pre-processing or post-processing operations on the inputs or outputs of the systolic array 22. The controller 26 may be further configured to control the operation of such additional components in those examples.

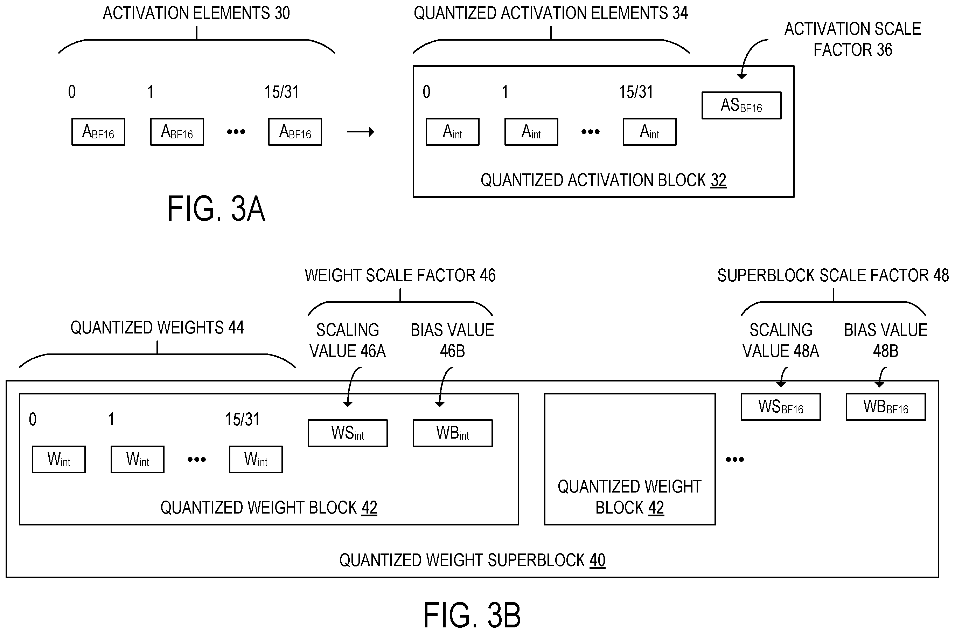

The hardware accelerator 20 of FIG. 2 is configured to process quantized matrix elements when performing GEMM. Quantized matrix elements are matrix elements that have been reduced in dimensionality such that fewer bits are used to store those matrix elements. In some examples, as schematically depicted in FIG. 3A, matrix quantization may be performed on a block level. FIG. 3A shows a plurality of activation elements 30 of an activation matrix that are converted into quantized activation elements 34. The quantized activation elements 34 are included in a quantized activation block 32 of a quantized activation matrix. The activation elements 30 in the example of FIG. 3A are stored in the bfloat16 format as elements $A_{BF16}$ and quantized into 8-bit integer elements $A_{int}$. An activation scale factor 46, shown in this example as a bfloat16 activation scale factor $AS_{BF16}$, is also stored along with the quantized activation elements 34 and may later be used at the hardware accelerator 20 to convert to quantized activation elements 34 from the int8 format into the bloat16 format. In other examples, a different data format such as 16-bit floating point (FP16) may instead be used for the activation elements 30 and/or the activation scale factor 46.

Computations that may be performed on the activation elements 30 and the activation scale factor 46 to apply block quantization are provided below, according to one example. The activation elements 30 stored in the bfloat16 format may be equal to:

$$A_{BF16} = A_{int} \times AS_{BF16}$$

In addition, the activation scale factor 46 may be equal to:

$$AS_{BF16} = max/{-128}$$

where *max* is a signed maximum absolute value. Thus, the 8-bit integer elements are equal to:

$$A_{int} = \frac{A_{BF16}}{AS_{BF16}} = -128\frac{A_{BF16}}{max}$$

In this example, a block-scaled activation element sum may be computed as follows:

$$\widehat{AS}_{BF16} = \left(\sum_0^{15/31} A_{int}\right) \times AS_{BF16}$$

In the above equation, 15/31 in the sum indicates that the 8-bit integer activation elements may be summed from 0 to 15 or from 0 to 31 depending on the size of the activation batch matrix. The block-scaled activation element sum may be used in superblock scaling, as discussed below.

FIG. 3B schematically shows an example of matrix quantization performed on the superblock level. FIG. 3B shows a quantized weight superblock 40 that includes a plurality of quantized weight blocks 42. Each of the quantized weight blocks 42 includes a plurality of quantized weights 44, which are shown as 8-bit integer values $W_{int}$ in the example of FIG. 3B. The quantized weights 44 may have a different format, such as a 4-bit or 2-bit integer format, in other examples.

The quantized weight blocks 42 additionally include respective weight scale factors 46, which are shown in the example of FIG. 3B as each including a respective scaling value 46A and a respective bias value 46B. The scaling value 46A and the bias value 46B are an 8-bit integer weight scaling value $WS_{int}$ and an 8-bit integer weight bias value $WB_{int}$ in the example of FIG. 3B. The scaling value 46A and/or the bias value 46B may, in other examples, be stored in some other format such as a 4-bit integer format.

The quantized weight superblock 40 further includes a superblock scale factor 48, which includes a scaling value 48A and a bias value 48B. The scaling value 48A and bias value 48B are a bfloat16 weight superblock scaling value $WS_{BF16}$ and a bfloat16 weight superblock bias value $WB_{BF16}$ in the example of FIG. 3B. Using the superblock scale factor 48, the hardware accelerator 20 may be configured to convert elements of the quantized weight blocks 42 included in the quantized weight superblock 40 from the int8 format into the bfloat16 format. Another format, such as FP16, may alternatively be used for the scaling value 48A and/or the bias value 48B.

Computations that may be performed to apply superblock quantization are provided below, according to one example. In this example, scaled quantized weights may be computed as:

$$\widehat{W}_{int} = W_{int} \times WS_{int}$$

In addition, a scaled superblock bias value may be computed as:

$$\widehat{WB}_{BF16} = WB_{int} \times WB_{BF16}$$

In the example of FIG. 3B, a block dot product may be computed as follows using the quantized activation elements 34 and the quantized weights:

*Block dot product*

$$= \sum_{k=0}^{15/31} \left( A_{int} \times AS_{BF16} \right.$$

$$\left. \times \left( (W_{int} \times WS_{int} \times WS_{BF16}) - (WB_{int} \times WB_{BF16}) \right) \right)$$

$$= \sum_{k=0}^{15/31} \left( \left( A_{int} \times (W_{int} \times WS_{int}) \right) \times AS_{BF16} \times WS_{BF16} \right)$$

$$- \left( \left( \sum_{0}^{15/31} A_{int} \right) \times AS_{BF16} \times WB_{int} \times WB_{BF16} \right)$$

$$= \left( \left( \sum_{k=0}^{15/31} \left( A_{int} \times \widehat{W}_{int} \right) \right) \times AS_{BF16} \times WS_{BF16} \right)$$

$$- \left( \left( \sum_{0}^{15/31} A_{int} \right) \times AS_{BF16} \times WB_{int} \times WB_{BF16} \right)$$

$$= \left( \left( \sum_{k=0}^{15/31} \left( A_{int} \times \widehat{W}_{int} \right) \right) \times AS_{BF16} \times WS_{BF16} \right)$$

$$- \left( \widehat{AS}_{BF16} \times \widehat{WB}_{BF16} \right)$$

In the above equations, $\widehat{AS}_{BF16}$ and $\widehat{WB}_{BF16}$ are values that are stored during quantization of the activations and weights, respectively. The scaled activation scaling value , $\widehat{AS}_{BF16}$ is computed as:

$$\widehat{AS}_{BF16} = \left( \sum_{0}^{15/31} A_{int} \right) \times AS_{BF16}$$

The scaled superblock bias value $\widehat{WB}_{BF16}$ is computed as discussed above.

Conventional hardware accelerators are not ordinarily structured in a manner that allows for native application of scale factors. Applying scale factors to blocks or superblocks at a conventional hardware accelerator may therefore be inefficient and may increase the latency of GEMM operations. In contrast, the hardware accelerator 20 discussed herein includes hardware-level support for GEMM operations that are performed on quantized matrices and include applying scale factors to blocks or superblocks.

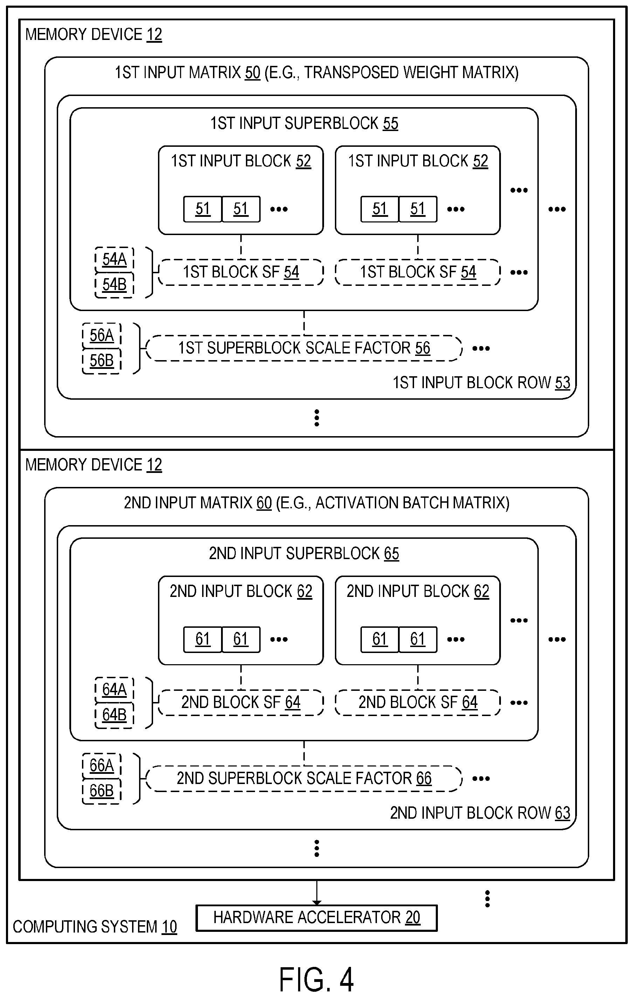

FIG. 4 schematically shows inputs of the systolic array 22 during a GEMM operation in additional detail, according to one example. As shown in FIG. 4, the one or more memory devices 12 store a first input matrix 50 and a second input matrix 60. The first input matrix 50 may, for example, be the transposed weight matrix $W^T$, and the second input matrix may be the activation batch matrix $AB$. In some examples, the first input matrix 50 is stored in synchronous dynamic random access memory (SDRAM) and the second input matrix 60 is stored in static random access memory (SRAM).

The first input matrix 50 includes a plurality of first input matrix elements 51 that are organized into a plurality of first input blocks 52, and the second input matrix 60 includes a plurality of second input matrix elements 61 that are organized into a plurality of second input blocks 62. The first input blocks 52 and the second input blocks 62 may be vectors that form partial rows of the first input matrix 50 and the second input matrix 60.

The one or more memory devices 12 may be further configured to store first block scale factors 54 associated with the first input blocks 52 and/or second block scale factors 64 associated with the second input blocks 62. The first block scale factors 54 may each include a respective first block scaling value 54A and a respective first block bias value 54B. The second block scale factors 64 may each include a respective second block scaling value 64A and a respective second block bias value 64B.

In the example of FIG. 4, the first input matrix 50 is arranged in a plurality of first input block rows 53 that each include a respective plurality of the first input blocks 52. In addition, the second input matrix 60 is arranged in a plurality of second input block rows 63 that each include a respective plurality of the second input blocks 62. The number of first input blocks 52 included in each first input block row 53 may be equal to the number of second input blocks 62 included in each second input block row 63.

The first input matrix 50 may be further arranged into a plurality of first input superblocks 55 that each include one or more of the first input blocks 52, and the second input matrix 60 may be further arranged into a plurality of second input superblocks 65 that each include one or more of the second input blocks 62. In examples in which superblocks are used, the first input block rows 53 may each include one or more respective first input superblocks 55, and the second input block rows 63 may each include one or more respective second input superblocks 65.

The first input superblocks 55 may have corresponding first superblock scale factors 56, and the second input superblocks 65 may have corresponding second superblock scale factors 66. The first superblock scale factor 56 may include a first superblock scaling value 56A and a first superblock bias value 56B. The second superblock scale factor 66 may include a second superblock scaling value 66A and a second superblock bias value 66B.

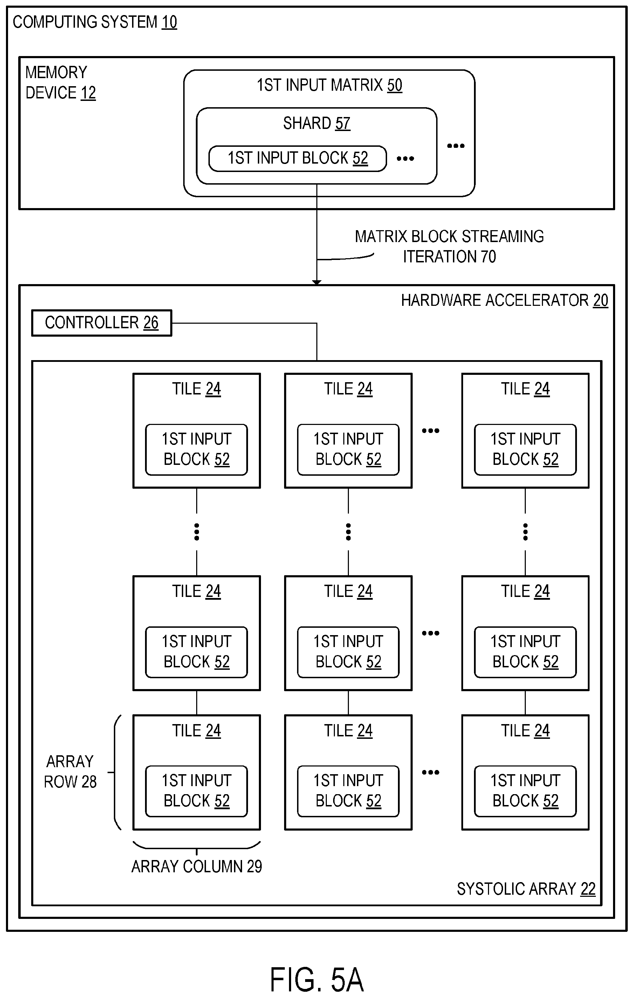

FIGS. 5A-5C schematically show the computing system 10 when a GEMM operation is performed. In the example of FIGS. 5A-5C, the systolic array 22 is configured to receive the first input matrix 50 over a plurality of matrix block streaming iterations 70. In each of the matrix block streaming iterations 70, the systolic array 22 is configured to receive a respective first input block 52 at each of the tiles 24. In GEMM operations performed between weight matrices and activation batch matrices, the weight matrix is typically multiple times the size of the activation batch matrix. Thus, over the plurality of matrix block streaming iterations 70, different input matrix shards 57 of the first input matrix 50 are iteratively read into the systolic array 22. At the systolic array 22, those input matrix shards 57 are each multiplied by the second input matrix 60, as discussed in further detail below.

As depicted in the example of FIG. 5A, the tiles 24 of the systolic array 22 are arranged in a plurality of array rows 28 and array columns 29. The location within the input matrix shard 57 of the first input block 52 received at a tile 24 may match the position of the tile 24 within the systolic array 22, in terms of the array row 28 and array column 29 within which the tile 24 is located.

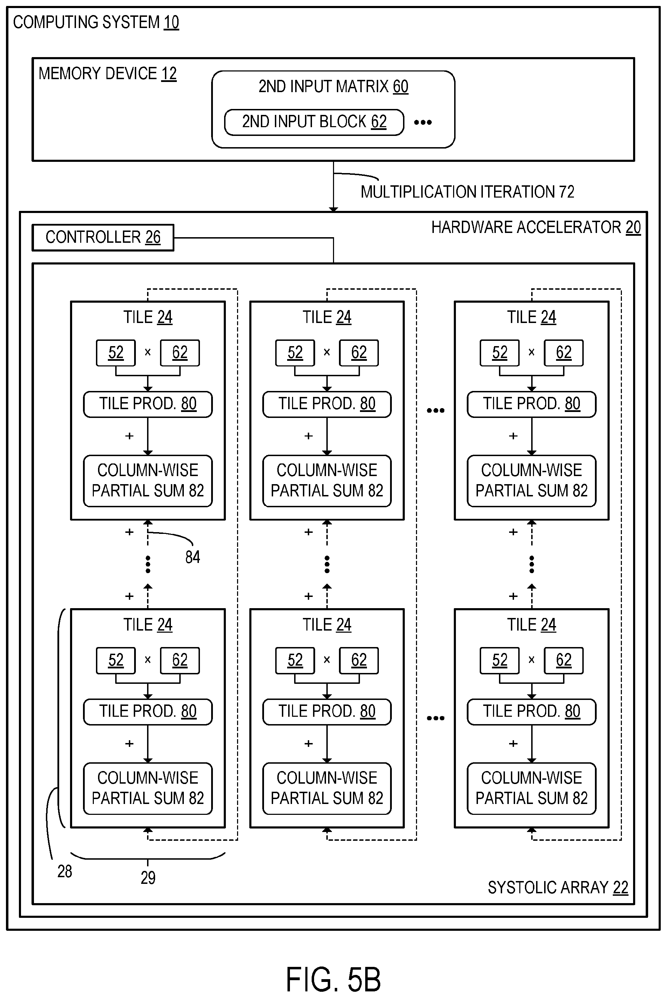

FIG. 5B schematically shows the computing system 10 when the systolic array 22 is configured to perform a plurality of multiplication iterations 72. In each of the multiplication iterations 72, each of the tiles 24 is configured to receive a respective second input block 62 of the second input matrix 60. The entire second input matrix 60 may be read into the systolic array 22 in this manner at each of the matrix block streaming iterations 72. Thus, the first input matrix elements 51 may each be read into the systolic array 22 once during the GEMM operation, whereas the second input matrix elements 61 may each be read into the systolic array 22 multiple times.

The systolic array 22 is configured to begin performing the plurality of multiplication iterations 72 prior to receiving the first input matrix 50 in its entirety. The systolic array 22 is accordingly configured to decrease the latency of the GEMM operation by streaming the input matrix shards 57 of the first input matrix 50 into the systolic array 22 over the plurality of matrix block streaming iterations 70 and beginning multiplication without having to wait to receive the entire first input matrix 50.

At each of the multiplication iterations 72, as shown in FIG. 5B, the tiles 24 are further configured to compute respective tile products 80 of the first input matrix elements 51 included in the first input blocks 52 and the second input matrix elements 61 included in the second input blocks 62. The tile products 80 are computed as dot products of the input blocks.

The tiles 24 are further configured to add the tile products 80 to respective column-wise partial sums 82. Subsequently to adding the tile products 80 to the column-wise partial sums 82, the tiles 24 are further configured to transmit the column-wise partial sums 82 to respective subsequent tiles 24 of the systolic array 22. The column-wise partial sums 82 are transmitted along accumulator rings 84 included in respective array columns 29 of the systolic array 22. The tiles 24 are accordingly configured to accumulate the tile products 80 computed at respective multiplication iterations 72 into the column-wise partial sums 82.

In examples in which first block scale factors 54 and/or second block scale factors 64 are included in the first input matrix 50 and/or the second input matrix 60, at each of the multiplication iterations 72, the hardware accelerator 20 may be further configured to scale the tile product 80 using the first block scale factor 54 and/or the second block scale factor 64 prior to adding the tile product to the column-wise partial sum 82, as discussed in further detail below.

Scaling by the one or more first superblock scale factors 56 and/or the one or more second superblock scale factors 66 may also be performed in some examples prior to adding the tile product 80 to the column-wise partial sum 82. In such examples, for each first input superblock 55 and/or second input superblock 65, the tiles 24 included in a plurality of blocks of the systolic array 22 are further configured to scale the respective tile products 80 computed at those tiles 24 using the first superblock scale factor 56 and/or the second superblock scale factor 66. The blocks of the systolic array 22 at which this superblock scaling is performed have locations corresponding to those of the superblocks.

As shown in the example of FIG. 5B, each accumulator ring 84 is configured to pass the column-wise partial sums 82 in a same direction along its respective array column 29 and to loop from a downstream end of the array column 29 to an upstream end. In some examples, during the plurality of multiplication iterations 72, the systolic array 22 is configured to cycle each of the column-wise partial sums 82 through the accumulator ring 84 multiple times. The hardware accelerator 20 may be configured to determine the number of times the column-wise partial sums 82 are cycled through the systolic array 22 based at least in part on the size of the second input matrix 60 relative to the first input matrix 50.

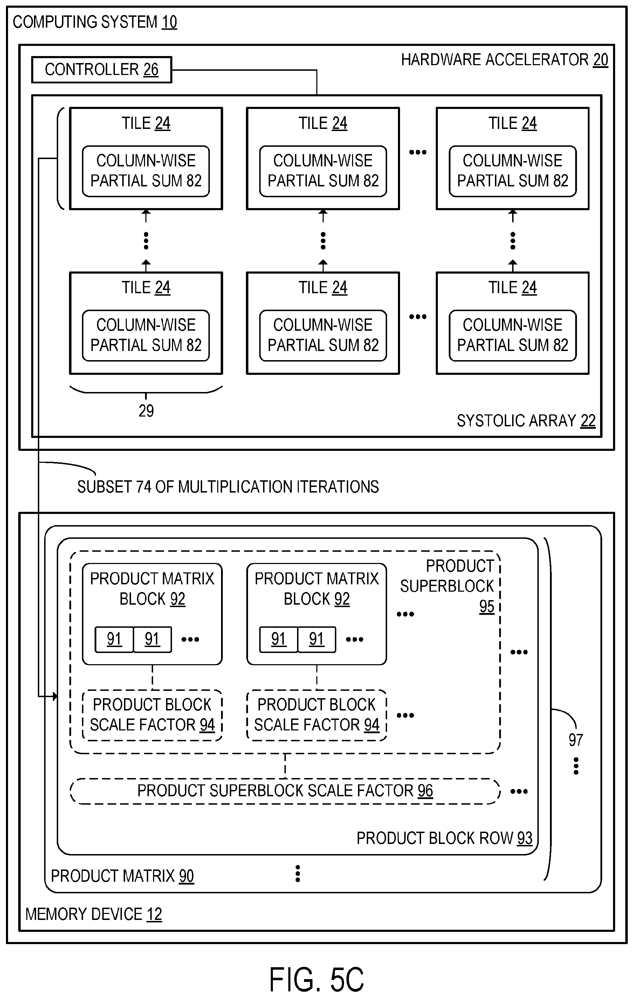

FIG. 5C schematically shows a product matrix 90 computed at the systolic array 22. The systolic array 22 is configured to output respective product block rows 93 of a product matrix 90. These product block rows 93 each include a plurality of product matrix blocks 92 computed as rows of the column-wise partial sums 82, and each of the product matrix blocks 92 is a vector of product matrix elements 91. in a subset 74 of the plurality of multiplication iterations 72. The subset 74 may be the set of multiplication iterations 72 at which the systolic array 22 has finished accumulating the rows of column-wise partial sums 82 after one or more respective cycles through the array columns 29.

The systolic array 22 is configured to output the product matrix 90 in an output stream in which the systolic array 22 iteratively outputs output matrix shards 97 of the product matrix 90 that are computed at respective matrix block streaming iterations 70 using corresponding input matrix shards 57 of the first input matrix 50. In the example of FIG 5C, the hardware accelerator 20 is configured to output the product matrix 90 for storage at the one or more memory devices 12. In other examples, the hardware accelerator 20 may additionally or alternatively be configured to output the product matrix 90 to the one or more processing devices 11 and/or from the systolic array 22 to another component of the hardware accelerator 20. For example, post-processing may be performed on the product matrix 90 at the hardware accelerator 20 subsequently to performing the GEMM operation.

In some examples, the hardware accelerator 20 or the one or more processing devices 11 may be further configured to compute one or more product block scale factors 94 respectively associated with the product matrix blocks 92. In some examples in which product block scale factors 94 are used, the product matrix blocks 92 may be further organized into a plurality of product superblocks 95, and the product superblocks 95 may have associated product superblock scale factors 96. These product superblocks 95 may be portions of one or more of the product block rows 93. Using the product block scale factors 94 and product superblock scale factors 96, quantized product matrix elements 91 of the product matrix 90 may be rescaled during subsequent processing. For example, quantization may be used at multiple layers of a neural network, and the product matrix 90 may be passed as an input to a subsequent layer.

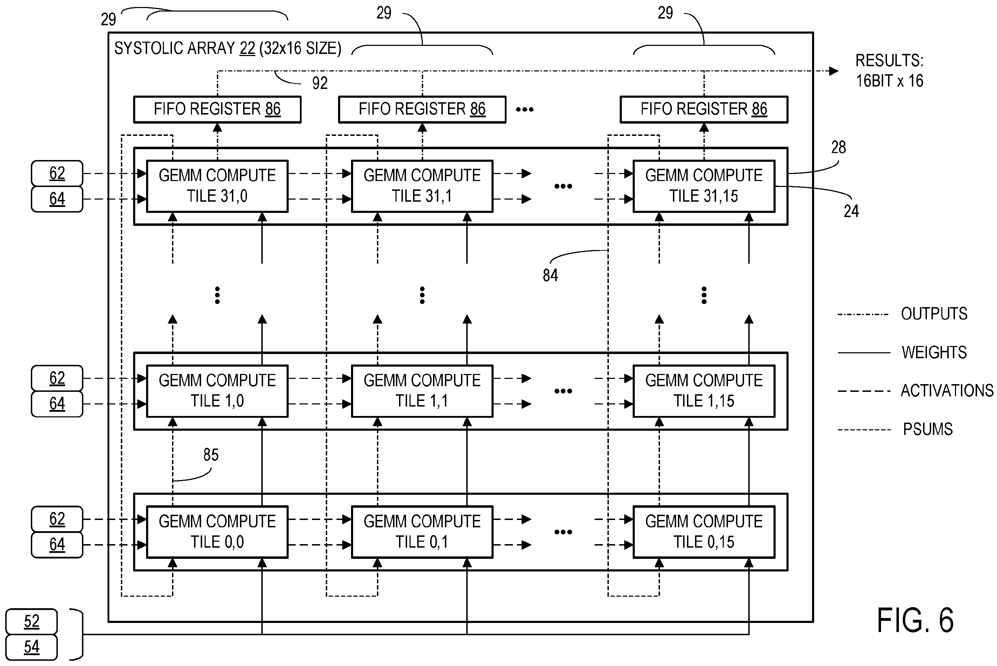

FIG. 6 schematically shows the systolic array 22 in additional detail, according to one example. In the example of FIG. 6, the systolic array 22 is a $32 \times 16$ array of tiles 24. The tiles 24 may be configured to receive the first input blocks 52 along the array columns 29 during the matrix block streaming iterations 70. In addition, the tiles 24 may be configured to receive the second input blocks 62 along the array rows 28 of the systolic array 22. In examples in which the first input matrix 50 includes first block scale factors 54, the systolic array 22 may be further configured to receive the one or more first block scale factors 54 along the array columns 29, and in examples in which the second input matrix 60 includes second block scale factors 64, the systolic array 22 may be further configured to receive the second block scale factors 64 along the array rows 28. The first input matrix 50 is a transposed weight matrix $W^T$ and the second input matrix 60 is an activation batch matrix $AB$ in the example of FIG. 6.

As depicted in the example of FIG. 6, the hardware accelerator 20 may further include a plurality of first-in-first-out (FIFO) registers 86 located in respective columns 29 of the systolic array 22. In such examples, the hardware accelerator 20 may be further configured to output the product matrix elements 91 via the FIFO registers 86. In each of the matrix block streaming iterations 70, the output matrix blocks 92 included in a corresponding output matrix shard 97 may be output from the systolic array 22 via the FIFO registers 86 included in the corresponding array columns 29.

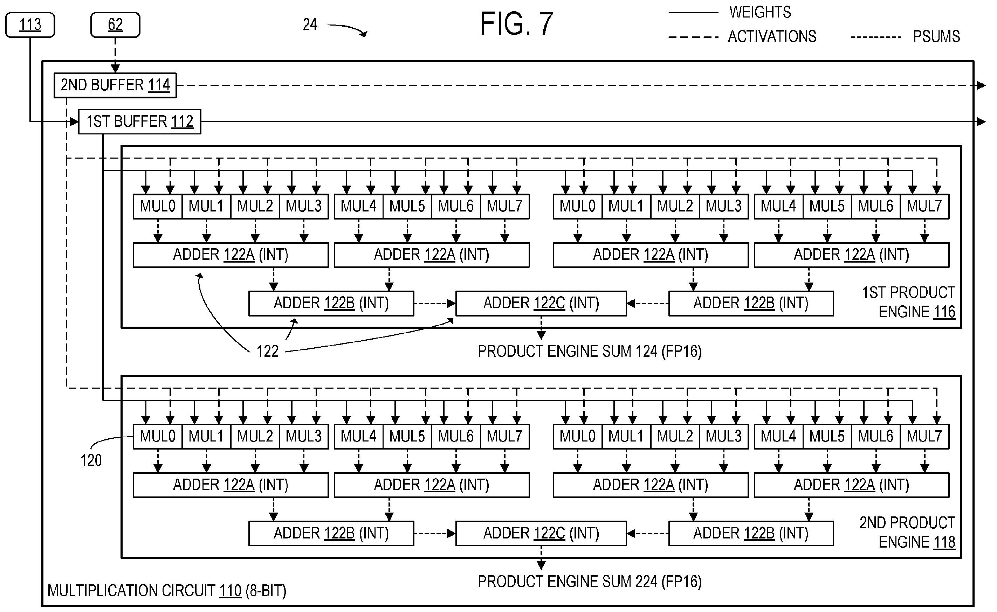

FIG. 7 schematically shows an example multiplication circuit 110 that may be included in a tile 24. The multiplication circuit 110 is an 8-bit multiplication circuit in the example of FIG. 7. The multiplication circuit 110 includes a first buffer 112 and a second buffer 114. The first buffer 112 is configured to receive scaled first input matrix elements 113 that have been computed by multiplying each of the first input matrix elements 51 included in the first input block 52 by the corresponding first block scaling value 54A. The scaled first input matrix elements 113 may, for example, be computed in a pre-processing stage in which the first matrix elements 51 included in first input superblocks 55 are expanded from 2-bit or 4-bit values to 8-bit values. The second buffer 114 is configured to receive the second input matrix elements 61 included in a second input block 62. In other examples, scaling may be applied to the second input matrix elements 61 instead of the first input matrix elements 51 prior to processing at the multiplication circuit 110.

In some examples, the first buffer 112 is further configured to receive the first block scale factor 54 corresponding to the first input block 52. The second buffer 114 may additionally or alternatively be further configured to receive the second block scale factor 64 corresponding to the second input block 62. In the example of FIG. 7, the multiplication circuit 110 is configured to receive two copies of each of the scaled first input matrix elements 113 and each of the second input matrix elements 61. The set of scaled first input matrix elements 113 received at the first buffer 112 in the example multiplication circuit 110 of FIG. 7 may have a $32 \times 8$-bit (uint8) format, and the set of second input matrix elements 61 received at the second buffer 114 may have a $32 \times 8$-bit (int8) format.

The multiplication circuit shown in the example of FIG. 7 includes a first product engine 116 and a second product engine 118. The first product engine 116 and the second product engine 118 each include a respective plurality of multiplier sub-circuits 120 and a respective plurality of adder sub-circuits 122. In the example of FIG. 7, the first product engine 116 and the second product engine 118 each include 16 multiplier sub-circuits 120 and seven adder sub-circuits 122. Within each of the product engines 116 and 118, the adder sub-circuits 122 are arranged in a hierarchy in which four upstream adder sub-circuits 122A receive inputs from four of the multiplier sub-circuits 120 each, two intermediate adder sub-circuits 122B receive inputs from pairs of the upstream adder sub-circuits 122A, and one downstream adder sub-circuit 122C receives inputs from the two intermediate adder sub-circuits 122B.

In the example of FIG. 7, the upstream adder sub-circuits 122A are each configured to add four integers. The intermediate adder sub-circuits 122B are each configured to add two of the outputs of the upstream adder sub-circuits 122A. The downstream adder sub-circuits 122C are both configured to add two of the outputs of the intermediate adder sub-circuits 122B to obtain respective product engine sums 124 as FP16 outputs.

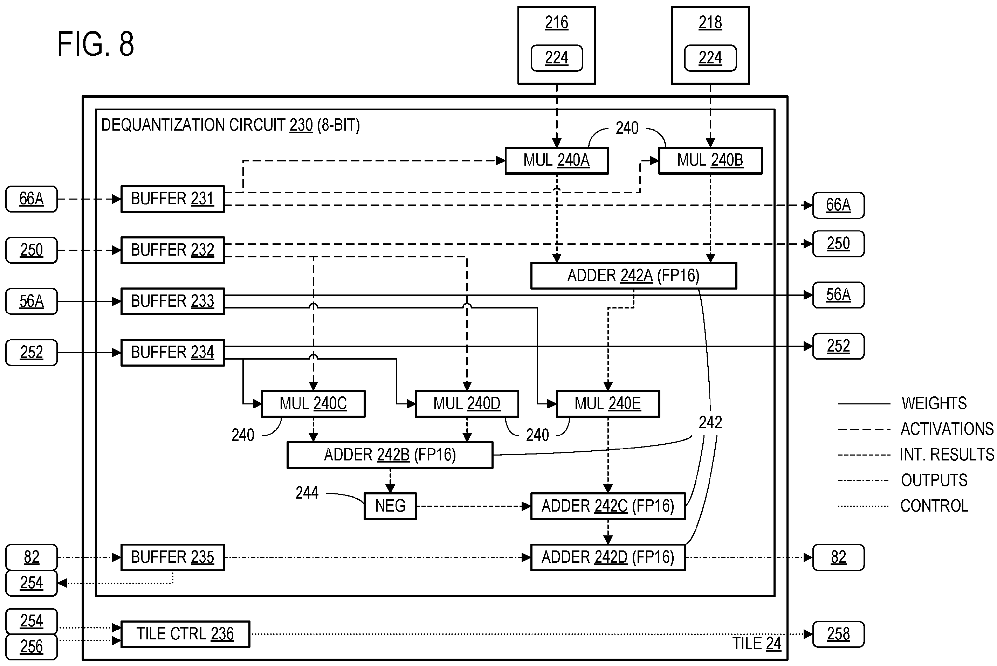

FIG. 8 schematically shows an example dequantization circuit 230 that may be included in the tile 24 in some examples. The dequantization circuit 230 shown in the example of FIG. 8 is an 8-bit dequantization circuit and is configured to receive the product engine sums 124 from the first product engine 116 and the second product engine 118 included in the multiplication circuit 110 of FIG. 7.

The dequantization circuit 230 further includes buffers 231, 232, 233, 234, and 235. At the buffer 231, the example dequantization circuit 230 of FIG. 8 is configured to receive the second superblock scaling value 66A associated with the second input block 62 currently undergoing processing at the tile 24. At the buffer 232, the dequantization circuit 230 is further configured to receive a superblock-scaled second element sum 250 as an additional input. The superblock-scaled second element sum 250 is computed in a pre-processing stage by summing the second input matrix elements 61 included in the second input block 62 and multiplying the result by the second superblock scaling value 66A. The superblock-scaled second element sum may be a scaled activation scaling value $\widehat{AS}_{FP16}$.

At the buffer 233, the dequantization circuit 230 is further configured to receive the first superblock scaling value 56A associated with the first input block 52 currently undergoing processing at the tile 24. At the buffer 234, the dequantization circuit 230 is further configured to receive an overall bias value 252. The overall bias value 252 is computed as a product of the first block bias value 54B and the first superblock bias value 56B associated with the first input block 52. The overall bias value 252 may be a scaled superblock bias value $\widehat{WB}_{FP16}$ and may also be computed in the pre-processing stage.

At the buffer 235, the dequantization circuit 230 is further configured to receive the column-wise partial sum 82 from a previous tile 24. In examples in which the tile 24 is located in a furthest upstream row of the systolic array 22 at the beginning of the multiplication iteration 70, the buffer 235 may receive a column-wise partial sum 82 initialized as a zero matrix.

The dequantization circuit 230 further includes a plurality of multiplier sub-circuits 240 and a plurality of adder sub-circuits 242. The multiplier sub-circuits 240 and the adder sub-circuits 242 included in the dequantization circuit 230 are FP16 sub-circuits. At a first multiplier sub-circuit 240A and a second multiplier sub-circuit 240B, the dequantization circuit 230 is configured to multiply respective copies of the product engine sums 224 by the second superblock scaling value 66A. The dequantization circuit 230 is further configured to sum the resulting products a first adder sub-circuit 242A.

At a third multiplier sub-circuit 240C and a fourth multiplier sub-circuit 240D, the dequantization circuit 230 is further configured to multiply respective copies of the superblock-scaled second element sum 250 by the overall bias value 252. The dequantization circuit 230 is further configured to add the resulting products at a second adder sub-circuit 242B. At a negation sub-circuit 244, the dequantization circuit 230 is further configured to multiply the resulting sum by -1.

At a fifth multiplier sub-circuit 240E, the dequantization circuit 230 is further configured to multiply the output of the first adder sub-circuit 242A by the first superblock scaling value 56A. At a third adder sub-circuit 242C, the dequantization circuit 230 is further configured to add an output of the negation sub-circuit 244 to the output of the fifth multiplier sub-circuit 240E. At a fourth adder sub-circuit 242D, the dequantization circuit 230 is further configured to add the output of the third adder sub-circuit 242C to the column-wise partial sum 82.

A tile control circuit 236 included in the tile 24 is also depicted in the example of FIG. 8. The tile control circuit 236 may be configured to receive a result buffer full indication 254 from a subsequent tile 24 in the systolic array 22. In addition, the tile control circuit 236 may be further configured to receive a controller signal 256 from the controller 26 of the hardware accelerator 20. The tile control circuit 236 may be further configured to output a tile control signal 258 to a subsequent tile 24 in the systolic array 22 based at least in part on the result buffer full indication 254 and the controller signal 256. In examples in which the tile control circuit 236 is configured to receive the result buffer full indication 254 from the subsequent tile 24, the tile control circuit 236 may be further configured to transmit a result buffer full indication 254 to a tile 24 located in a previous array row 28 when the buffer 235 is full.

In addition to the tile control signal 258, the dequantization circuit 230 may be further configured to output the second superblock scaling value 66A, the superblock-scaled second element sum 250, the first superblock scaling value 56A, the overall bias value 252, and the column-wise partial sum 82 to a subsequent tile 24 in the systolic array 22. Thus, the column-wise partial sum 82 is iteratively computed and the other input values to the dequantization circuit 230 are made available to the subsequent tile 24.

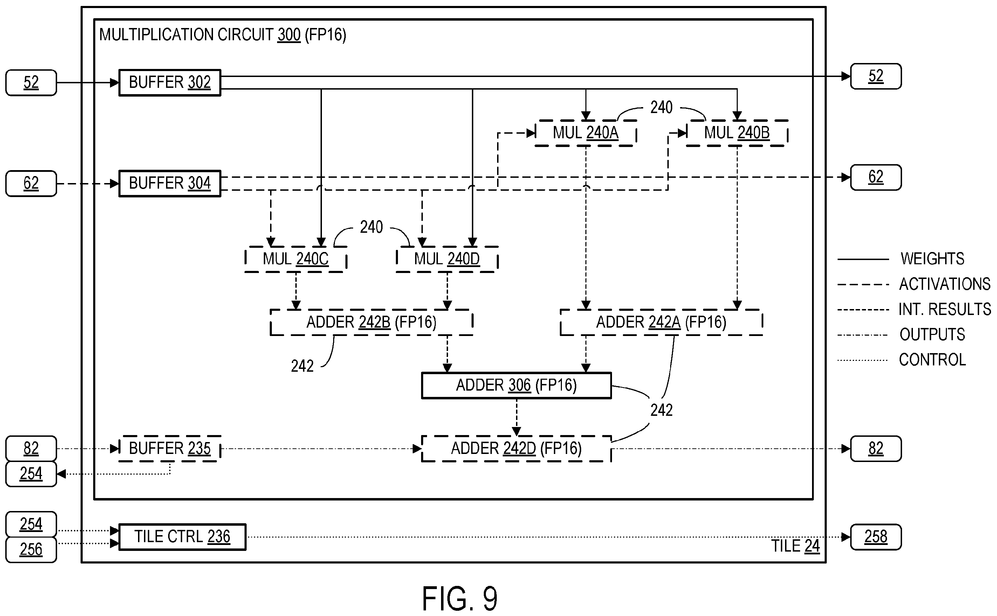

FIG. 9 schematically shows an FP16 multiplication circuit 300 that may be included in the tile 24 additionally or alternatively to the 8-bit multiplication circuit 110. The multiplication circuit 300 shown in the example of FIG. 9 includes a buffer 302, a buffer 304, and an adder 306. In addition, the multiplication circuit 300 and the 8-bit dequantization circuit 230 of FIG. 8 share a plurality of the multiplier sub-circuits 240 and a plurality of the adder sub-circuits 242. The multiplication circuit 300 reuses the first, second, third and fourth multiplier sub-circuits 240A, 240B, 240C, and 240D, as well as the first, second, and fourth adder sub-circuits 242A, 242B, and 242D. The buffer 235 is also included in both the dequantization circuit 230 and the multiplication circuit 300. By reusing components of the dequantization circuit 230 in the multiplication circuit 300, the size and cost of the tile 24 may be reduced.

At the buffer 302 and the buffer 304, the multiplication circuit 300 is respectively configured to receive a first input block 52 and a second input block 62. As in the example multiplication circuit 110 of FIG. 7, the multiplication circuit 300 of FIG. 9 may be configured to receive 4 first input matrix elements 51 and 4 second input matrix elements 61, each of which have the FP16 format. The multiplication circuit 300 is further configured to receive a column-wise partial sum 82 at the buffer 235.

At the first multiplier sub-circuit 240A and the second multiplier sub-circuit 240B, the multiplication circuit 300 is configured to multiply the first input block 52 by the second input block 62. The multiplication circuit 300 is further configured to add the outputs of the first multiplier sub-circuit 240A and the second multiplier sub-circuit 240B at the first adder sub-circuit 242A. The multiplication circuit 300 is also configured to multiply the first input block 52 by the second input block 62 at both the third multiplier sub-circuit 240C and the fourth multiplier sub-circuit 240D, and to add the outputs of the third multiplier sub-circuit 240C and the fourth multiplier sub-circuit 240D at the second adder sub-circuit 242B. At the adder sub-circuit 306, the multiplication circuit 300 is further configured to add the outputs of the first adder sub-circuit 242A and the second adder sub-circuit 242B.

At the fourth adder sub-circuit 242D, the multiplication circuit 300 is further configured to add the output of the adder sub-circuit 306 to the column-wise partial sum 82. The multiplication circuit 300 is further configured to output the column-wise partial sum 82 to a downstream tile 24. In addition, the multiplication circuit 300 is further configured to pass the first input block 52 and the second input block 62 to the subsequent tile 24.

FIG. 9 further shows the tile control circuit 236. As in the example of FIG. 8, the buffer 235 may be further configured to output a result buffer full indication 254 to a previous tile 24 when the buffer 235 is full. The tile control circuit 236 may be configured to receive the result buffer full indication 254 from the subsequent tile 24. In addition, the tile control circuit 236 may be further configured to a controller signal 256 from the controller 26, and to output a tile control signal 258 to the subsequent tile 24 based at least in part on the controller signal 256 and the result buffer full indication 254.

Using the configurations of the systolic array 22 and tiles 24 discussed above, matrix element quantization and dequantization are supported at the hardware level. This hardware-level support for quantized GEMM operations allows quantized matrix elements to be processed more efficiently than they could be processed at a conventional hardware accelerator.

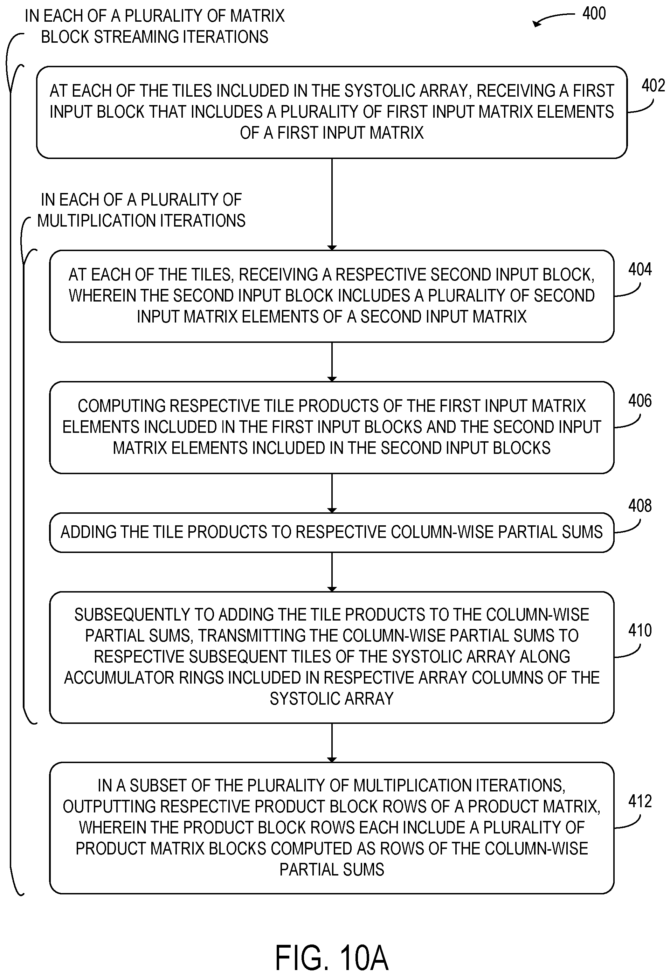

FIG. 10A shows a flowchart of an example method 400 for use with a hardware accelerator configured to perform GEMM operations. The hardware accelerator at which the method 400 is performed includes a plurality of tiles arranged in a systolic array. The hardware accelerator is included in a computing system along with other computing components, including one or more memory devices and one or more other processing devices.

The steps of the method 400 are performed in each of a plurality of matrix block streaming iterations. At step 402, at each of the tiles included in the systolic array, the method 400 includes receiving a first input block that includes a plurality of first input matrix elements of a first input matrix. The first input matrix is accordingly received at the systolic array in a plurality of input matrix shards, which are received in respective matrix block streaming iterations. The first input blocks may be structured as vectors of the first input matrix elements. The first input matrix may, for example, be a weight matrix of a neural network.

The method 400 further includes steps 404, 406, 408, and 410, which, during each of the matrix block streaming iterations, are performed in each of a plurality of multiplication iterations. At step 404, the method 400 further includes receiving a respective second input block at each of the tiles of the systolic array. The second input block includes a plurality of second input matrix elements of a second input matrix, which may be arranged in a vector. The systolic array is accordingly configured to receive each element of the second input matrix at each of the multiplication iterations, whereas each element of the first input matrix is received once during the GEMM operation. The second input matrix may be an activation batch matrix.

At step 406, the method 400 further includes computing respective tile products of the first input matrix elements included in the first input blocks and the second input matrix elements included in the second input blocks. The tile products are each computed as dot products of the first input blocks and second input blocks received at the respective tiles.

At step 408, the method 400 further includes adding the tile products to respective column-wise partial sums. At step 410, subsequently to adding the tile products to the column-wise partial sums, the method 400 further includes transmitting the column-wise partial sums to respective subsequent tiles of the systolic array along accumulator rings included in respective array columns of the systolic array. The accumulator rings loop from respective downstream ends to respective upstream ends of the array columns. The column-wise partial sums are therefore accumulated over the course of the multiplication iterations included in a matrix block streaming iteration.

At step 412, the method 400 further includes outputting respective product block rows of a product matrix. The product block rows each include a plurality of product matrix blocks computed as rows of the column-wise partial sums. The product block rows may each be structured as a vector of product matrix elements. The product block rows are output in a subset of the plurality of multiplication iterations, which are the multiplication iterations in which at least one of the product block rows has been fully accumulated from the column-wise partial sums with which it is computed. The product block rows may be output to a memory device, a processing device, and/or another component of the hardware accelerator. In some examples, the product block rows are output via FIFO registers included in the array columns.

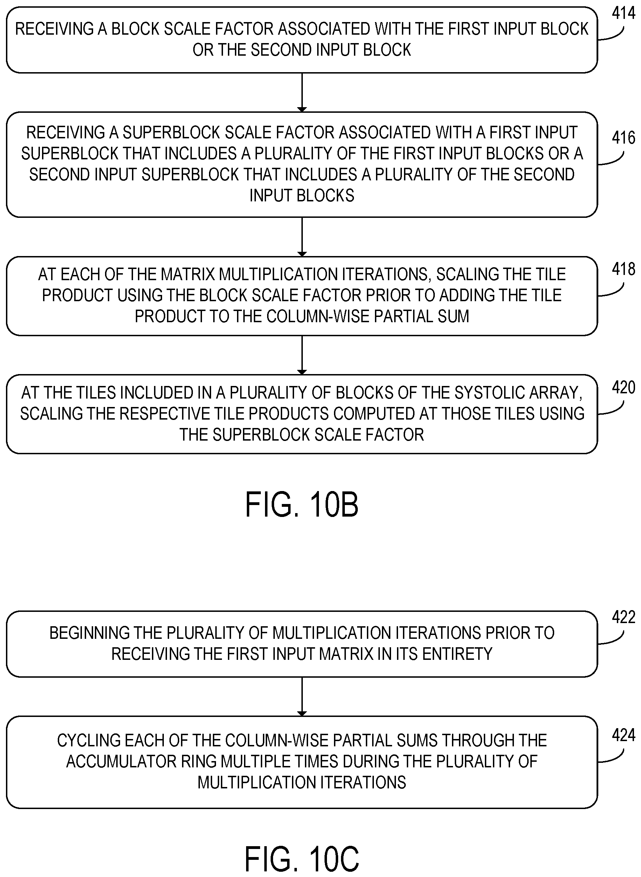

FIG. 10B shows additional steps of the method 400 that may be performed in examples in which matrix quantization is used. At step 414, the method 400 may further include receiving a block scale factor associated with the first input block or the second input block. In some examples, both the first input block and the second input block may have respective block scale factors. The block scale factors may each include a respective block scaling value and a respective block bias value.

In examples in which step 414 is performed, at step 416, the method 400 may further include receiving a superblock scale factor associated with a first input superblock. The first input superblock includes a plurality of the first input blocks. Additionally or alternatively, in some examples. a superblock scale factor associated with a second input superblock may be received at step 416. The second input superblock includes a plurality of the second input blocks in such examples. Similarly to the block scale factors, the superblock scale factors may each include a respective superblock scaling value and a respective superblock bias value.

At step 418, the method 400 may further include, at each of the matrix multiplication iterations, scaling the tile product using the block scale factor prior to adding the tile product to the column-wise partial sum. In examples at which step 416 is performed, the method 400 may further include step 420. At step 420, the method 400 may further include, at the tiles included in a plurality of blocks of the systolic array, scaling the respective tile products computed at those tiles using the superblock scale factor. The tile products may be scaled using the superblock scale factors prior to adding the tile products to the column-wise partial sum.

In examples in which the steps of FIG. 10B are performed, the tiles may each include a multiplication circuit at which the tile product is computed and a dequantization circuit at which the block scale factor is applied to the tile product. In such examples, the multiplication circuit and the dequantization circuit may share a plurality of multiplier sub-circuits and a plurality of adder sub-circuits. The size and component count of the tiles may therefore be reduced.

FIG. 10C shows additional steps of the method 400 that may be performed in some examples at the systolic array during the plurality of multiplication iterations. At step 422, the method 400 may further include beginning the plurality of multiplication iterations prior to receiving the first input matrix in its entirety. Thus, the hardware accelerator parallelizes receiving the input matrix shards and computing the product matrix elements. Additionally or alternatively, at step 424, the method 400 may further include cycling each of the column-wise partial sums through the accumulator ring multiple times during the plurality of multiplication iterations.

The devices and methods discussed above allow a hardware accelerator to perform GEMM operations in a manner in which inputs and outputs are streamed to and from a systolic array. Streaming the inputs and outputs allows for reduced idle time at the systolic array compared to previous GEMM accelerators in which the input and output matrices are loaded into buffers in their entirety before processing or output. The devices and methods discussed above also provide hardware-level support for GEMM operations performed on quantized matrices. This hardware-level support allows the hardware accelerator to achieve the efficiency increases associated with quantization while avoiding many of the efficiency decreases associated with pre-processing and post-processing quantized matrices. The hardware accelerator discussed above is therefore able to perform GEMM operations more quickly and efficiently than conventional GEMM accelerators.

The methods and processes described herein are tied to a computing system of one or more computing devices. In particular, such methods and processes can be implemented as a computer-application program or service, an application-programming interface (API), a library, and/or other computer-program product.

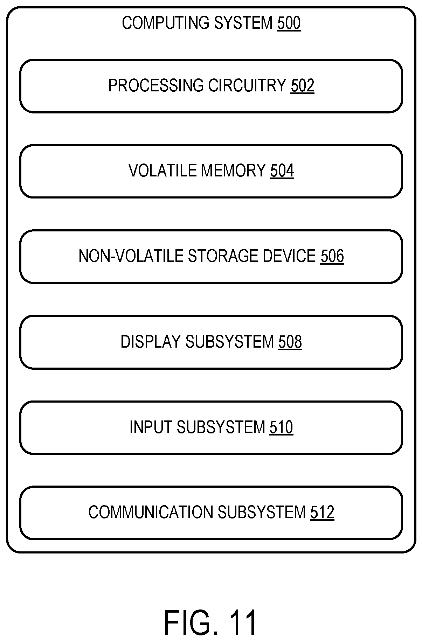

FIG. 11 schematically shows a non-limiting embodiment of a computing system 500 that can enact one or more of the methods and processes described above. Computing system 500 is shown in simplified form. Computing system 500 may embody the computing system 10 described above and illustrated in FIG. 2. Components of computing system 500 may be included in one or more personal computers, server computers, tablet computers, home-entertainment computers, network computing devices, video game devices, mobile computing devices, mobile communication devices (e.g., smartphone), and/or other computing devices, and wearable computing devices such as smart wristwatches and head mounted augmented reality devices.

Computing system 500 includes processing circuitry 502, volatile memory 504, and a non-volatile storage device 506. Computing system 500 may optionally include a display subsystem 508, input subsystem 510, communication subsystem 512, and/or other components not shown in FIG. 11.

Processing circuitry 502 typically includes one or more logic processors, which are physical devices configured to execute instructions. For example, the logic processors may be configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor may include one or more physical processors configured to execute software instructions. Additionally or alternatively, the logic processor may include one or more hardware logic circuits or firmware devices configured to execute hardware-implemented logic or firmware instructions. Processors of the processing circuitry 502 may be single-core or multi-core, and the instructions executed thereon may be configured for sequential, parallel, and/or distributed processing. Individual components of the processing circuitry 502 optionally may be distributed among two or more separate devices, which may be remotely located and/or configured for coordinated processing. For example, aspects of the computing system 500 disclosed herein may be virtualized and executed by remotely accessible, networked computing devices configured in a cloud-computing configuration. In such a case, these virtualized aspects are run on different physical logic processors of various different machines. These different physical logic processors of the different machines will be understood to be collectively encompassed by processing circuitry 502.

Non-volatile storage device 506 includes one or more physical devices configured to hold instructions executable by the processing circuitry 502 to implement the methods and processes described herein. When such methods and processes are implemented, the state of non-volatile storage device 506 may be transformed-e.g., to hold different data.

Non-volatile storage device 506 may include physical devices that are removable and/or built in. Non-volatile storage device 506 may include optical memory, semiconductor memory, and/or magnetic memory, or other mass storage device technology. Non-volatile storage device 506 may include nonvolatile, dynamic, static, read/write, read-only, sequential-access, location-addressable, file-addressable, and/or content-addressable devices. It will be appreciated that non-volatile storage device 506 is configured to hold instructions even when power is cut to the non-volatile storage device 506.

Volatile memory 504 may include physical devices that include random access memory. Volatile memory 504 is typically utilized by processing circuitry 502 to temporarily store information during processing of software instructions. It will be appreciated that volatile memory 504 typically does not continue to store instructions when power is cut to the volatile memory 504.

Aspects of processing circuitry 502, volatile memory 504, and non-volatile storage device 506 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module" and "program" may be used to describe an aspect of computing system 500 typically implemented in software by a processor to perform a particular function using portions of volatile memory, which function involves transformative processing that specially configures the processor to perform the function. Thus, a module or program may be instantiated via processing circuitry 502 executing instructions held by non-volatile storage device 506, using portions of volatile memory 504. It will be understood that different modules and/or programs may be instantiated from the same application, service, code block, object, library, routine, API, function, etc. Likewise, the same module or program may be instantiated by different applications, services, code blocks, objects, routines, APIs, functions, etc. The terms "module" and "program" may encompass individual or groups of executable files, data files, libraries, drivers, scripts, database records, etc.

When included, display subsystem 508 may be used to present a visual representation of data held by non-volatile storage device 506. The visual representation may take the form of a graphical user interface (GUI). As the herein described methods and processes change the data held by the non-volatile storage device 506, and thus transform the state of the non-volatile storage device, the state of display subsystem 508 may likewise be transformed to visually represent changes in the underlying data. Display subsystem 508 may include one or more display devices utilizing virtually any type of technology. Such display devices may be combined with processing circuitry 502, volatile memory 504, and/or non-volatile storage device 506 in a shared enclosure, or such display devices may be peripheral display devices.

When included, input subsystem 510 may comprise or interface with one or more user-input devices such as a keyboard, mouse, touch screen, camera, or microphone.

When included, communication subsystem 512 may be configured to communicatively couple various computing devices described herein with each other, and with other devices. Communication subsystem 512 may include wired and/or wireless communication devices compatible with one or more different communication protocols. As non-limiting examples, the communication subsystem may be configured for communication via a wired or wireless local- or wide-area network, broadband cellular network, etc. In some embodiments, the communication subsystem may allow computing system 500 to send and/or receive messages to and/or from other devices via a network such as the Internet.

The following paragraphs discuss several aspects of the present disclosure. According to one aspect of the present disclosure, a hardware accelerator is provided, including a plurality of tiles arranged in a systolic array. The systolic array is configured to, in each of a plurality of matrix block streaming iterations, at each of the tiles included in the systolic array, receive a first input block that includes a plurality of first input matrix elements of a first input matrix. In each of a plurality of multiplication iterations, at each of the tiles, the systolic array is further configured to receive a respective second input block. The second input block includes a plurality of second input matrix elements of a second input matrix. The systolic array is further configured to compute respective tile products of the first input matrix elements included in the first input blocks and the second input matrix elements included in the second input blocks. The systolic array is further configured to add the tile products to respective column-wise partial sums. Subsequently to adding the tile products to the column-wise partial sums, the systolic array is further configured to transmit the column-wise partial sums to respective subsequent tiles of the systolic array along accumulator rings included in respective array columns of the systolic array. In a subset of the plurality of multiplication iterations, the systolic array is further configured to output respective product block rows of a product matrix. The product block rows each include a plurality of product matrix blocks computed as rows of the column-wise partial sums. The above features may have the technical effect of performing a GEMM operation in a manner that achieves low idle times for the systolic array.

According to this aspect, the tiles may each be further configured to receive a block scale factor associated with the first input block or the second input block. At each of the matrix multiplication iterations, the tiles may each be further configured to scale the tile product using the block scale factor prior to adding the tile product to the column-wise partial sum. The above features may have the technical effect of providing hardware-level support for matrix element quantization, thereby allowing GEMM operations on quantized matrices to be performed more efficiently.

According to this aspect, the block scale factors may each include a respective block scaling value and a respective block bias value. The above features may have the technical effect of scaling and offsetting the matrix elements included in the blocks.

According to this aspect, the hardware accelerator may be further configured to receive a superblock scale factor associated with a first input superblock that includes a plurality of the first input blocks or a second input superblock that includes a plurality of the second input blocks. The tiles included in a plurality of blocks of the systolic array may be further configured to scale the respective tile products computed at those tiles using the superblock scale factor. The above features may have the technical effect of applying an additional level of scaling to the blocks included in a superblock, thereby allowing further control over matrix element quantization.

According to this aspect, the superblock scale factor may include a superblock scaling value and a superblock bias value. The above features may have the technical effect of further scaling and offsetting the matrix elements included in the superblock.

According to this aspect, the tiles may each include a multiplication circuit configured to compute the tile product. The tiles may each further include a dequantization circuit configured to apply the block scale factor to the tile product. The multiplication circuit and the dequantization circuit may share a plurality of multiplier sub-circuits and a plurality of adder sub-circuits. The above features may have the technical effect of decreasing the size and complexity of the tiles via reuse of sub-circuits.

According to this aspect, during the plurality of multiplication iterations, the systolic array may be configured to cycle each of the column-wise partial sums through the accumulator ring multiple times. The above features may have the technical effect of accumulating the column-wise partial sums to compute the product matrix elements.

According to this aspect, the systolic array may be configured to output the product matrix blocks via first-in-first-out (FIFO) registers respectively associated with the array columns. The above features may have the technical effect of outputting the product matrix blocks subsequently to accumulation.

According to this aspect, the first input matrix may be a weight matrix of a neural network, and the second input matrix may be an activation batch matrix. The above features may have the technical effect of executing a machine learning model in a time-efficient manner.

According to this aspect, the systolic array may be configured to begin performing the plurality of multiplication iterations prior to receiving the first input matrix in its entirety. The above features may have the technical effect of decreasing the idle time of the systolic array.

According to another aspect of the present disclosure, a method is provided for use with a hardware accelerator that includes a plurality of tiles arranged in a systolic array. The method includes, in each of a plurality of matrix block streaming iterations, at each of the tiles included in the systolic array, receiving a first input block that includes a plurality of first input matrix elements of a first input matrix. In each of a plurality of multiplication iterations, at each of the tiles, the method further includes receiving a respective second input block. The second input block includes a plurality of second input matrix elements of a second input matrix. The method further includes computing respective tile products of the first input matrix elements included in the first input blocks and the second input matrix elements included in the second input blocks. The method further includes adding the tile products to respective column-wise partial sums. Subsequently to adding the tile products to the column-wise partial sums, the method further includes transmitting the column-wise partial sums to respective subsequent tiles of the systolic array along accumulator rings included in respective array columns of the systolic array. In a subset of the plurality of multiplication iterations, the method further includes outputting respective product block rows of a product matrix. The product block rows each include a plurality of product matrix blocks computed as rows of the column-wise partial sums. The above features may have the technical effect of performing a GEMM operation in a manner that achieves low idle times for the systolic array.

According to this aspect, the method may further include, at each of the tiles, receiving a block scale factor associated with the first input block or the second input block. At each of the matrix multiplication iterations, the method may further include scaling the tile product using the block scale factor prior to adding the tile product to the column-wise partial sum. The above features may have the technical effect of providing hardware-level support for matrix element quantization, thereby allowing GEMM operations on quantized matrices to be performed more efficiently.

According to this aspect, the block scale factors may each include a respective block scaling value and a respective block bias value. The above features may have the technical effect of scaling and offsetting the matrix elements included in the blocks.

According to this aspect, the method may further include receiving a superblock scale factor associated with a first input superblock that includes a plurality of the first input blocks or a second input superblock that includes a plurality of the second input blocks. At the tiles included in a plurality of blocks of the systolic array, the method may further include scaling the respective tile products computed at those tiles using the superblock scale factor. The above features may have the technical effect of applying an additional level of scaling to the blocks included in a superblock, thereby allowing further control over matrix element quantization.

According to this aspect, the superblock scale factor may include a superblock scaling value and a superblock bias value. The above features may have the technical effect of further scaling and offsetting the matrix elements included in the superblock.

According to this aspect, each of the tile products may be computed at a respective multiplication circuit included in the corresponding tile. The block scale factor may be applied to the tile product at a dequantization circuit included in the tile. The multiplication circuit and the dequantization circuit may share a plurality of multiplier sub-circuits and a plurality of adder sub-circuits. The above features may have the technical effect of decreasing the size and complexity of the tiles via reuse of sub-circuits.

According to this aspect, the method may further include cycling each of the column-wise partial sums through the accumulator ring multiple times during the plurality of multiplication iterations. The above features may have the technical effect of accumulating the column-wise partial sums to compute the product matrix elements.

According to this aspect, the first input matrix may be a weight matrix of a neural network, and the second input matrix may be an activation batch matrix. The above features may have the technical effect of executing a machine learning model in a time-efficient manner.

According to this aspect, the method may further include, at the systolic array, beginning the plurality of multiplication iterations prior to receiving the first input matrix in its entirety. The above features may have the technical effect of decreasing the idle time of the systolic array.

According to another aspect of the present disclosure, a hardware accelerator is provided, including a plurality of tiles arranged in a systolic array. The systolic array is configured to, in each of a plurality of matrix block streaming iterations, at each of the tiles included in the systolic array, receive a weight block that includes a plurality of weight matrix elements of a weight matrix of a neural network. The systolic array is further configured to receive a weight block scale factor associated with the weight block. In each of a plurality of multiplication iterations, at each of the tiles, the systolic array is further configured to receive a respective activation block. The activation block includes a plurality of activation batch matrix elements of an activation batch matrix. The systolic array is further configured to compute respective tile products of the weight matrix elements included in the weight blocks and the activation batch matrix elements included in the activation blocks. The systolic array is further configured to scale the tile products using the corresponding weight block scale factors. The systolic array is further configured to accumulate the scaled tile products along respective array columns of the systolic array. In a subset of the plurality of multiplication iterations, the systolic array is further configured to output respective product block rows of a product matrix. The product block rows each include a plurality of product matrix blocks computed at least in part by accumulating the scaled tile products. The above features may have the technical effect of performing a GEMM operation when executing a machine learning model in a manner that achieves low idle times for the systolic array.

"And/or" as used herein is defined as the inclusive or V, as specified by the following truth table:

| A | B | $A \vee B$ |
|---|---|---|
| True | True | True |
| True | False | True |
| False | True | True |
| False | False | False |

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

The subject matter of the present disclosure includes all novel and non-obvious combinations and sub-combinations of the various processes, systems and configurations, and other features, functions, acts, and/or properties disclosed herein, as well as any and all equivalents thereof.

**Claims**

1. A hardware accelerator (20) comprising:
   a plurality of tiles (24) arranged in a systolic array (22), wherein the systolic array is configured to:
   in each of a plurality of matrix block streaming iterations (70):

   at each of the tiles included in the systolic array, receive a first input block (52) that includes a plurality of first input matrix elements (51) of a first input matrix (50);
   in each of a plurality of multiplication iterations (72):

   at each of the tiles, receive a respective second input block (62), wherein the second input block includes a plurality of second input matrix elements (61) of a second input matrix (60);
   compute respective tile products (80) of the first input matrix elements included in the first input blocks and the second input matrix elements included in the second input blocks;
   add the tile products to respective column-wise partial sums (82); and
   subsequently to adding the tile products to the column-wise partial sums, transmit the column-wise partial sums to respective subsequent tiles of the systolic array along accumulator rings (84) included in respective array columns (29) of the systolic array; and

   in a subset (74) of the plurality of multiplication iterations, output respective product block rows (93) of a product matrix (90), wherein the product block rows each include a plurality of product matrix blocks (92) computed as rows of the column-wise partial sums.

2. The hardware accelerator of claim 1, wherein the tiles are each further configured to:

   receive a block scale factor associated with the first input block or the second input block; and
   at each of the matrix multiplication iterations, scale the tile product using the block scale factor prior to adding the tile product to the column-wise partial sum.

3. The hardware accelerator of claim 2, wherein the block scale factors each include a respective block scaling value and a respective block bias value.

4. The hardware accelerator of claim 2 or 3, wherein:

   the hardware accelerator is further configured to receive a superblock scale factor associated with:

a first input superblock that includes a plurality of the first input blocks; or
a second input superblock that includes a plurality of the second input blocks; and

the tiles included in a plurality of blocks of the systolic array are further configured to scale the respective tile products computed at those tiles using the superblock scale factor.

5. The hardware accelerator of claim 4, wherein the superblock scale factor includes a superblock scaling value and a superblock bias value.

6. The hardware accelerator of any of claims 2-5, wherein the tiles each include:

a multiplication circuit configured to compute the tile product; and
a dequantization circuit configured to apply the block scale factor to the tile product, wherein the multiplication circuit and the dequantization circuit share a plurality of multiplier sub-circuits and a plurality of adder sub-circuits.

7. The hardware accelerator of any of claims 1-6, wherein, during the plurality of multiplication iterations, the systolic array is configured to cycle each of the column-wise partial sums through the accumulator ring multiple times.

8. The hardware accelerator of any of claims 1-7, wherein the systolic array is configured to output the product matrix blocks via first-in-first-out (FIFO) registers respectively associated with the array columns.

9. The hardware accelerator of any of claims 1-8, wherein:

the first input matrix is a weight matrix of a neural network; and
the second input matrix is an activation batch matrix.

10. The hardware accelerator of any of claims 1-9, wherein the systolic array is configured to begin performing the plurality of multiplication iterations prior to receiving the first input matrix in its entirety.

11. A method (400) for use with a hardware accelerator that includes a plurality of tiles arranged in a systolic array, the method comprising:
in each of a plurality of matrix block streaming iterations:

at each of the tiles included in the systolic array, receiving a first input block that includes a plurality of first input matrix elements of a first input matrix (402);
in each of a plurality of multiplication iterations:

at each of the tiles, receiving a respective second input block, wherein the second input block includes a plurality of second input matrix elements of a second input matrix (404);
computing respective tile products of the first input matrix elements included in the first input blocks and the second input matrix elements included in the second input blocks (406);
adding the tile products to respective column-wise partial sums (408); and
subsequently to adding the tile products to the column-wise partial sums, transmitting the column-wise partial sums to respective subsequent tiles of the systolic array along accumulator rings included in respective array columns of the systolic array (410); and

in a subset of the plurality of multiplication iterations, outputting respective product block rows of a product matrix, wherein the product block rows each include a plurality of product matrix blocks computed as rows of the column-wise partial sums (412).

12. The method of claim 11, further comprising, at each of the tiles:

receiving a block scale factor associated with the first input block or the second input block; and
at each of the matrix multiplication iterations, scaling the tile product using the block scale factor prior to adding the tile product to the column-wise partial sum.

13. The method of claim 12, wherein the block scale factors each include a respective block scaling value and a respective block bias value.

**14.** The method of claim 12 or 13, further comprising:

receiving a superblock scale factor associated with:

a first input superblock that includes a plurality of the first input blocks; or
a second input superblock that includes a plurality of the second input blocks; and

at the tiles included in a plurality of blocks of the systolic array, scaling the respective tile products computed at those tiles using the superblock scale factor.

**15.** The method of claim 14, wherein the superblock scale factor includes a superblock scaling value and a superblock bias value.

FIG. 1 (CONVENTIONAL ART)

COMPUTING SYSTEM 10

PROCESSING DEVICE
11

MEMORY DEVICE 12

HARDWARE ACCELERATOR 20

CONTROLLER
26

TILE 24 — TILE 24 — TILE 24 — TILE 24

TILE 24 — TILE 24 — TILE 24 — TILE 24

TILE 24 — TILE 24 — TILE 24 — TILE 24

TILE 24 — TILE 24 — TILE 24 — TILE 24

SYSTOLIC ARRAY 22

FIG. 2

ACTIVATION ELEMENTS 30

QUANTIZED ACTIVATION ELEMENTS 34

ACTIVATION SCALE FACTOR 36

| 0 | 1 | | 15/31 |
| $A_{BF16}$ | $A_{BF16}$ | $\cdots$ | $A_{BF16}$ | $\longrightarrow$ |

| 0 | 1 | | 15/31 | |
| $A_{int}$ | $A_{int}$ | $\cdots$ | $A_{int}$ | $AS_{BF16}$ |

QUANTIZED ACTIVATION BLOCK 32

## FIG. 3A

WEIGHT SCALE FACTOR 46

SUPERBLOCK SCALE FACTOR 48

QUANTIZED WEIGHTS 44

SCALING VALUE 46A

BIAS VALUE 46B

SCALING VALUE 48A

BIAS VALUE 48B

| 0 | 1 | | 15/31 | $WS_{int}$ | $WB_{int}$ |
| $W_{int}$ | $W_{int}$ | $\cdots$ | $W_{int}$ | | |

QUANTIZED WEIGHT BLOCK 42

QUANTIZED WEIGHT BLOCK 42

$\cdots$

$WS_{BF16}$    $WB_{BF16}$

QUANTIZED WEIGHT SUPERBLOCK 40

## FIG. 3B

MEMORY DEVICE 12

1ST INPUT MATRIX 50 (E.G., TRANSPOSED WEIGHT MATRIX)

1ST INPUT SUPERBLOCK 55

| 1ST INPUT BLOCK 52 | 1ST INPUT BLOCK 52 |
|---|---|
| 51 51 ••• | 51 51 ••• |

••• •••

54A
54B } 1ST BLOCK SF 54    1ST BLOCK SF 54 •••

56A
56B } 1ST SUPERBLOCK SCALE FACTOR 56 •••

1ST INPUT BLOCK ROW 53

⋮

MEMORY DEVICE 12

2ND INPUT MATRIX 60 (E.G., ACTIVATION BATCH MATRIX)

2ND INPUT SUPERBLOCK 65

| 2ND INPUT BLOCK 62 | 2ND INPUT BLOCK 62 |
|---|---|
| 61 61 ••• | 61 61 ••• |

••• •••

64A
64B } 2ND BLOCK SF 64    2ND BLOCK SF 64 •••

66A
66B } 2ND SUPERBLOCK SCALE FACTOR 66 •••

2ND INPUT BLOCK ROW 63

⋮

COMPUTING SYSTEM 10    HARDWARE ACCELERATOR 20

⋮

FIG. 4

COMPUTING SYSTEM <u>10</u>

MEMORY DEVICE <u>12</u>

1ST INPUT MATRIX <u>50</u>

SHARD <u>57</u>

1ST INPUT BLOCK <u>52</u> •••

•••

MATRIX BLOCK STREAMING ITERATION 70

HARDWARE ACCELERATOR <u>20</u>

CONTROLLER <u>26</u>

TILE <u>24</u>

1ST INPUT BLOCK <u>52</u>

TILE <u>24</u>

1ST INPUT BLOCK <u>52</u>

•••

TILE <u>24</u>

1ST INPUT BLOCK <u>52</u>

TILE <u>24</u>

1ST INPUT BLOCK <u>52</u>

TILE <u>24</u>

1ST INPUT BLOCK <u>52</u>

•••

TILE <u>24</u>

1ST INPUT BLOCK <u>52</u>

ARRAY ROW 28

TILE <u>24</u>

1ST INPUT BLOCK <u>52</u>

TILE <u>24</u>

1ST INPUT BLOCK <u>52</u>

•••

TILE <u>24</u>

1ST INPUT BLOCK <u>52</u>

ARRAY COLUMN 29

SYSTOLIC ARRAY <u>22</u>

FIG. 5A

**COMPUTING SYSTEM 10**

**MEMORY DEVICE 12**

**2ND INPUT MATRIX 60**

2ND INPUT BLOCK 62 •••

MULTIPLICATION ITERATION 72

**HARDWARE ACCELERATOR 20**

CONTROLLER 26

TILE 24

52 × 62

TILE PROD. 80

+

COLUMN-WISE PARTIAL SUM 82

+

84

+

TILE 24

52 × 62

TILE PROD. 80

+

COLUMN-WISE PARTIAL SUM 82

28 29

TILE 24

52 × 62

TILE PROD. 80

+

COLUMN-WISE PARTIAL SUM 82

+

+

TILE 24

52 × 62

TILE PROD. 80

+

COLUMN-WISE PARTIAL SUM 82

TILE 24

52 × 62

TILE PROD. 80

+

COLUMN-WISE PARTIAL SUM 82

•••

+

+

TILE 24

52 × 62

TILE PROD. 80

+

COLUMN-WISE PARTIAL SUM 82

•••

**SYSTOLIC ARRAY 22**

# FIG. 5B

COMPUTING SYSTEM 10

HARDWARE ACCELERATOR 20

CONTROLLER 26

TILE 24

COLUMN-WISE PARTIAL SUM 82

TILE 24

COLUMN-WISE PARTIAL SUM 82

• • •

TILE 24

COLUMN-WISE PARTIAL SUM 82

TILE 24

COLUMN-WISE PARTIAL SUM 82

TILE 24

COLUMN-WISE PARTIAL SUM 82

• • •

TILE 24

COLUMN-WISE PARTIAL SUM 82

29

SYSTOLIC ARRAY 22

SUBSET 74 OF MULTIPLICATION ITERATIONS

PRODUCT MATRIX BLOCK 92

91 | 91 • • •

PRODUCT MATRIX BLOCK 92

91 | 91 • • •

PRODUCT SUPERBLOCK 95

• • •

PRODUCT BLOCK SCALE FACTOR 94

PRODUCT BLOCK SCALE FACTOR 94

• • •

• • •

97

PRODUCT SUPERBLOCK SCALE FACTOR 96 • • •

PRODUCT BLOCK ROW 93

PRODUCT MATRIX 90

MEMORY DEVICE 12

FIG. 5C

FIG. 6

SYSTOLIC ARRAY 22 (32x16 SIZE)

RESULTS:
16BIT x 16

FIFO REGISTER 86          FIFO REGISTER 86          FIFO REGISTER 86

GEMM COMPUTE TILE 31,0    GEMM COMPUTE TILE 31,1    GEMM COMPUTE TILE 31,15

GEMM COMPUTE TILE 1,0     GEMM COMPUTE TILE 1,1     GEMM COMPUTE TILE 1,15

GEMM COMPUTE TILE 0,0     GEMM COMPUTE TILE 0,1     GEMM COMPUTE TILE 0,15

······· OUTPUTS
——— WEIGHTS
– – – ACTIVATIONS
--------- PSUMS

EP 4 650 988 A1

24

FIG. 7

WEIGHTS
ACTIVATIONS
PSUMS

MULTIPLICATION CIRCUIT 110 (8-BIT)

EP 4 650 988 A1

FIG. 8

DEQUANTIZATION CIRCUIT 230 (8-BIT)

TILE 24

WEIGHTS
ACTIVATIONS
INT. RESULTS
OUTPUTS
CONTROL

FIG. 9

400

IN EACH OF A PLURALITY OF MATRIX
BLOCK STREAMING ITERATIONS

> AT EACH OF THE TILES INCLUDED IN THE SYSTOLIC ARRAY, RECEIVING A FIRST
> INPUT BLOCK THAT INCLUDES A PLURALITY OF FIRST INPUT MATRIX ELEMENTS
> OF A FIRST INPUT MATRIX
>
> 402

IN EACH OF A PLURALITY OF
MULTIPLICATION ITERATIONS

> AT EACH OF THE TILES, RECEIVING A RESPECTIVE SECOND INPUT BLOCK,
> WHEREIN THE SECOND INPUT BLOCK INCLUDES A PLURALITY OF SECOND
> INPUT MATRIX ELEMENTS OF A SECOND INPUT MATRIX
>
> 404

> COMPUTING RESPECTIVE TILE PRODUCTS OF THE FIRST INPUT MATRIX
> ELEMENTS INCLUDED IN THE FIRST INPUT BLOCKS AND THE SECOND INPUT
> MATRIX ELEMENTS INCLUDED IN THE SECOND INPUT BLOCKS
>
> 406

> ADDING THE TILE PRODUCTS TO RESPECTIVE COLUMN-WISE PARTIAL SUMS
>
> 408

> SUBSEQUENTLY TO ADDING THE TILE PRODUCTS TO THE COLUMN-WISE
> PARTIAL SUMS, TRANSMITTING THE COLUMN-WISE PARTIAL SUMS TO
> RESPECTIVE SUBSEQUENT TILES OF THE SYSTOLIC ARRAY ALONG
> ACCUMULATOR RINGS INCLUDED IN RESPECTIVE ARRAY COLUMNS OF THE
> SYSTOLIC ARRAY
>
> 410

> IN A SUBSET OF THE PLURALITY OF MULTIPLICATION ITERATIONS,
> OUTPUTTING RESPECTIVE PRODUCT BLOCK ROWS OF A PRODUCT MATRIX,
> WHEREIN THE PRODUCT BLOCK ROWS EACH INCLUDE A PLURALITY OF
> PRODUCT MATRIX BLOCKS COMPUTED AS ROWS OF THE COLUMN-WISE
> PARTIAL SUMS
>
> 412

FIG. 10A

RECEIVING A BLOCK SCALE FACTOR ASSOCIATED WITH THE FIRST INPUT BLOCK OR THE SECOND INPUT BLOCK — 414

RECEIVING A SUPERBLOCK SCALE FACTOR ASSOCIATED WITH A FIRST INPUT SUPERBLOCK THAT INCLUDES A PLURALITY OF THE FIRST INPUT BLOCKS OR A SECOND INPUT SUPERBLOCK THAT INCLUDES A PLURALITY OF THE SECOND INPUT BLOCKS — 416

AT EACH OF THE MATRIX MULTIPLICATION ITERATIONS, SCALING THE TILE PRODUCT USING THE BLOCK SCALE FACTOR PRIOR TO ADDING THE TILE PRODUCT TO THE COLUMN-WISE PARTIAL SUM — 418

AT THE TILES INCLUDED IN A PLURALITY OF BLOCKS OF THE SYSTOLIC ARRAY, SCALING THE RESPECTIVE TILE PRODUCTS COMPUTED AT THOSE TILES USING THE SUPERBLOCK SCALE FACTOR — 420

## FIG. 10B

BEGINNING THE PLURALITY OF MULTIPLICATION ITERATIONS PRIOR TO RECEIVING THE FIRST INPUT MATRIX IN ITS ENTIRETY — 422

CYCLING EACH OF THE COLUMN-WISE PARTIAL SUMS THROUGH THE ACCUMULATOR RING MULTIPLE TIMES DURING THE PLURALITY OF MULTIPLICATION ITERATIONS — 424

## FIG. 10C

COMPUTING SYSTEM 500

PROCESSING CIRCUITRY 502

VOLATILE MEMORY 504

NON-VOLATILE STORAGE DEVICE 506

DISPLAY SUBSYSTEM 508

INPUT SUBSYSTEM 510

COMMUNICATION SUBSYSTEM 512

FIG. 11

| | Europäisches Patentamt European Patent Office Office européen des brevets | **EUROPEAN SEARCH REPORT** | **Application Number** EP 25 17 4849 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ADIONO TRIO ET AL: "Fast and Scalable Multicore YOLOv3-Tiny Accelerator Using Input Stationary Systolic Architecture", IEEE TRANSACTIONS ON VERY LARGE SCALE INTEGRATION (VLSI) SYSTEMS, IEEE SERVICE CENTER, PISCATAWAY, NJ, USA, vol. 31, no. 11, 1 November 2023 (2023-11-01), pages 1774-1787, XP011951447, ISSN: 1063-8210, DOI: 10.1109/TVLSI.2023.3305937 [retrieved on 2023-08-30] * sections I-IV; figures 3, 4, 6 * | 1-15 | INV. G06F17/16 G06F7/00 |
| A | Chen Jian ET AL: "Design of Precision Configurable Multiply Accumulate Unit for Neural Network Accelerator 1", , 21 October 2022 (2022-10-21), XP093320751, Retrieved from the Internet: URL:https://ceur-ws.org/Vol-3351/paper05.pdf [retrieved on 2025-09-30] * page 33 - page 34; figure 4 * | 1-15 | TECHNICAL FIELDS SEARCHED (IPC) G06F |

-/--

The present search report has been drawn up for all claims

| Place of search | Date of completion of the search | Examiner |
|---|---|---|
| Berlin | 2 October 2025 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 25 17 4849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CAMUS VINCENT ET AL: "Review and Benchmarking of Precision-Scalable Multiply-Accumulate Unit Architectures for Embedded Neural-Network Processing", IEEE JOURNAL ON EMERGING AND SELECTED TOPICS IN CIRCUITS AND SYSTEMS, IEEE, PISCATAWAY, NJ, USA, vol. 9, no. 4, 1 December 2019 (2019-12-01), pages 697-711, XP011759587, ISSN: 2156-3357, DOI: 10.1109/JETCAS.2019.2950386 [retrieved on 2019-12-10] * section III * | 1-15 | |
| | | | TECHNICAL FIELDS SEARCHED (IPC) |

The present search report has been drawn up for all claims

| Place of search | Date of completion of the search | Examiner |
|---|---|---|
| Berlin | 2 October 2025 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2